# FASCICULE DE BREVET EUROPEEN

(11) **EP 0 554 939 B1**
(45) Date de publication et mention de la délivrance du brevet: **04.06.1997**
(21) Numéro de dépôt: 93200198.5
(22) Date de dépôt: 27.01.1993
(51) Int. Cl.: C08L 3/02

(54) **Composition à base d'amidon**
Zusammensetzung auf Basis von Stärke
Starch composition

(30) Priorité: 07.02.1992 BE 9200130
(43) Date de publication de la demande: 11.08.1993
(73) Titulaire: SOLVAY (Société Anonyme), B-1050 Bruxelles (BE)
(72) Inventeur: Dehennau, Claude, B-1410 Waterloo (BE); Depireux, Thierry, B-1410 Waterloo (BE)
(74) Mandataire: Dufrasne, Eugène

(56) Documents cités:
- EP-A- 0 409 788
- WO-A-91/02025
- US-A- 5 026 745
- CHEMICAL ABSTRACTS, vol. 92, no. 10, 10 March 1980, Columbus, Ohio, US; abstract no. 77309q, LIN CHEN-CHONG 'STUDIES ON MULTICOMPONENT POLYMERS' page 27 ;

## Description

### Objet de l'invention

La présente invention concerne une composition à base d'amidon, éventuellement plastifié, présentant des propriétés améliorées, notamment de transparence et de résistance mécanique grâce à la présence d'un agent de couplage comprenant éventuellement un polymère thermoplastique.

L'invention est également relative au procédé de préparation de la composition selon l'invention et à son utilisation.

### Etat de la technique et arrière-plan technologique

L'amidon constitue une source intéressante de macromolécules puisque renouvelable grâce au cycle de la photosynthèse, qui est disponible en grande quantité, biodégradable et économique.

Par suite de sa structure chimique et physique, l'amidon n'est intrinsèquement pas un thermoplastique et il est utilisé principalement dans des préparations à base d'eau comme liant, épaississant ou aliment.

On a donc cherché à modifier l'amidon en le plastifiant et/ou en lui faisant subir un traitement thermique approprié pour le rendre formable à chaud.

Dans la demande de brevet européen EP-A-0 304 401 (Warner Lambert Co.), on propose d'utiliser un amidon déstructuré lors d'une mise en oeuvre préalable telle qu'une extrusion et éventuellement de l'additionner d'eau, ce qui rend le produit final moulable à chaud.

Des composants additionnels tels que des plastifiants de polyalkylène-glycol ou d'acétate de glycérol peuvent être également incorporés à l'amidon déstructuré.

Dans la demande de brevet européen EP-A-0 282 451 (Warner Lambert Co.), on propose d'utiliser un amidon également déstructuré, dont la viscosité a été réduite au moyen d'un catalyseur de dépolymérisation.

Des composants additionnels tels que des plastifiants, des diluants ou des charges peuvent également être incorporés à l'amidon.

Il est connu par le document WO-90 10 019 (Tomka) d'extruder de l'amidon thermoplastique sous forme d'un mélange d'un amidon, au moins partiellement cristallin, avec de l'eau et/ou d'autres additifs tels que la glycérine (5 à 35 % en poids par rapport au poids total du mélange), qui réduisent sa température de fusion (voir page 27, lignes 1 à 7 et revendication 13).

Par la demande de brevet WO-90 05 161 (Tomka), on connaît une technique de chauffage et de mélange de l'amidon avec d'autres additifs qui permettent une fusion de l'amidon à une température inférieure à sa température de décomposition.

Cependant, l'amidon traité selon ces procédés reste un matériau hydrophile qui absorbe l'eau, qui le plastifie et lui fait perdre toute propriété mécanique. Ceci constitue un obstacle majeur à une utilisation de masse de ce produit, bien que le caractère hydrophile constitue aussi une propriété nécessaire à une bonne biodégradabilité.

Des recherches ont donc été également menées pour réduire la sensibilité de l'amidon à l'eau notamment en enduisant l'amidon d'un composé hydrophobe.

La demande de brevet européen EP-0 378 646-A (Tomka) (équivalent à WO-90 00 1043) décrit le revêtement d'un polymère hydrophile tel que l'amidon ou la gélatine par un composé hydrophobe filmogène constitué d'acide polyhydroxycarboxylique, éventuellement additionné de protéines, de lipides naturels, de cire et/ou de paraffine.

Le document "Starch-based film for Degradable Agricultural Mulch" (Ind. Eng. Chem. Prod. Res. Develop. vol. 13 (1), 1974, p. 90) décrit un revêtement par le polychlorure de vinyle (PVC) ou par un copolymère de chlorure de vinylidène et d'acrylonitrile, d'un film d'amidon additionné d'un alcool polyvinylique (PVA) et réticulé par le formaldéhyde.

Des mélanges d'amidon avec des copolymères ont été aussi décrits dans les documents suivants :
- Le brevet US-A-4 133 784 (U.S. Secretary of Agriculture) et le document "Composites of starch and polyethylene coacrylic acid, Complexing between polymers components, (Journal of Applied Polymeric Science, vol. 40, pp. 811 à 821, 1990) mentionnent un matériau composite à base d'amidon et d'un copolymère d'éthylène et d'acide acrylique (EAA) qui est décrit comme n'étant stable aux conditions atmosphériques que pour des durées de temps limitées.
- Le brevet EP-0 408 503-A (Warner Lambert Co.) décrit un matériau composite constitué d'amidon déstructuré et de copolymères du type éthylène-alcool vinylique (EVOH) et éventuellement un polymère thermoplastique insoluble dans l'eau.

Cependant, les produits obtenus se révèlent fragiles et se déchirent facilement directement après leur mise en oeuvre et lors du stockage s'assouplissent à mesure de l'absorption d'eau et de la plastification qu'elle produit.

### Buts de l'invention

L'invention vise à fournir une composition à base d'un amidon modifié par l'adjonction d'un agent dit de couplage polymère conférant à l'amidon thermoformé des propriétés améliorées, en particulier des propriétés améliorées de transparence, de résistance à la déchirure et de moindre blanchiment lors d'une pliure.

A titre complémentaire, la présente invention vise à fournir un agent qui agit comme compatibilisant pour un mélange d'amidon avec un polymère thermoplastique et qui renforce les propriétés de résistance mécanique dudit mélange.

### Eléments caractéristiques de l'invention

Il est envisageable d'ajouter à l'amidon des polymères tels que des polyoléfines qui réduisent la pénétration de l'eau par leur hydrophobicité naturelle, afin que ces mélanges présentent des propriétés améliorées de résistance à l'humidité. Des mélanges de ce type, en particulier des mélanges de polyoléfines et d'amidon sont cependant très hétérogènes car l'amidon très polaire est incompatible avec une polyoléfine apolaire.

Selon l'invention, on propose une composition d'alliage présentant des propriétés améliorées de transparence et de résistance mécanique comprenant un amidon, et un polymère agissant comme agent de couplage choisi dans le groupe constitué par les polyoléfines modifiées par des fonctions chimiques actives à l'égard des fonctions hydroxyles de l'amidon qui se caractérise en ce que le rapport de son module dynamique élastique G' à son module dissipatif G'', mesuré à 160°C et à une fréquence de 0,1 rad par sec. (0,1 sec.⁻¹), est supérieur à 1,6 et, de préférence supérieur à 1,7.

Des précisions sur la mesure et la signification physique des modules G' et G'' seront données dans la description qui suit de formes d'exécution préférées de l'invention.

Selon une forme d'exécution préférée de l'invention, le polymère agissant comme agent de couplage est choisi dans le groupe formé par les polyoléfines modifiées par greffage d'anhydre maléïque et par les copolymères et terpolymères d'éthylène contenant des unités dérivées de l'anhydride maléïque.

L'utilisation d'amidon additionné d'un plastifiant, en particulier de glycérine, de diglycérine, de polyglycérine et/ou de sorbitol peut dans de nombreux cas se révéler avantageuse.

Selon une autre forme d'exécution préférée de l'invention, la composition comprend également un polymère thermoplastique qui, de préférence, est une polyoléfine, telle que le polyéthylène.

Les amidons mis en oeuvre sont d'origine naturelle et végétale. Ces carbohydrates sont composés principalement d'amylose et/ou d'amylopectine se trouvant à des teneurs variables selon leur origine biologique. Ils peuvent être déstructurés, prégélifiés ou modifiés après adjonction d'eau et/ou d'un plastifiant tel que décrit ci-dessus selon le procédé décrit dans la demande de brevet WO-90 10 019 (Tomka).

L'amidon peut être, à titre d'exemple non limitatif, un amidon de maïs normal, un amidon de maïs riche en amylose (EURYLON 7® de Roquette), un amidon de maïs riche en amylopectine (Waxilys® de Roquette), un amidon de blé (Nutralys® de Roquette), un amidon de pomme de terre ou un mélange de ceux-ci.

De préférence, l'amidon utilisé dans les compositions de l'invention est un amidon dont la teneur en amylopectine est supérieur à 70 % qui permet d'obtenir des produits plus transparents, incolores et non collants après reprise d'eau au contact de l'humidité atmosphérique.

Les valeurs des pourcentages pondéraux des différents composants de l'alliage selon l'invention sont respectivement de l'ordre de 20 à 80 % et de préférence, 40 à 60 % d'amidon, de préférence de l'amidon plastifié, 0 à 70 % et de préférence 30 à 50 % de polymère thermoplastique et de 1 à 30 %, de préférence 5 à 20 % d'agent de couplage.

Lorsque l'amidon plastifié est mis en oeuvre, il peut contenir jusqu'à 50 % en poids de plastifiant, de préférence cependant de l'ordre de 5 à 40 % en poids de plastifiant, exprimé par rapport au poids total de l'amidon et du plastifiant.

Les polymères servant d'agents de couplage utilisés dans les compositions selon l'invention sont, ainsi qu'il a été indiqué, des composés qui présentent des fonctions chimiques actives à l'égard des fonctions hydroxyles de l'amidon.

Ces polymères sont peu cristallins et ont une température de fusion inférieure à 150°C.

Avantageusement, l'agent de couplage peut également être utilisé pour compatibiliser un polymère thermoplastique avec de l'amidon.

L'addition d'un polymère thermoplastique, en particulier une polyoléfine telle que le polyéthylène réduisant la pénétration de l'eau par son hydrophobicité naturelle donne un alliage qui présente des propriétés améliorées de résistance à l'humidité.

Dans les compositions comprenant 20 à 80 %, de préférence 40 à 60 % d'amidon plastifié, l'incorporation de 10 à 70 %, de préférence 30 à 50 % d'un polymère thermoplastique et de 1 à 30 %, de préférence de 5 à 20 % d'un agent compatibilisant, permet également d'accroître les propriétés d'allongement à la rupture à différentes températures des produits de l'invention.

Un autre aspect de l'invention concerne un procédé de préparation d'une composition à base d'amidon dans lequel on alimente un outil de plastification avec un mélange mécanique comportant l'agent de couplage, l'amidon additionné d'un plastifiant précompoundé ou non, et éventuellement un polymère thermoplastique. L'outil de plastification peut être une extrudeuse à double vis co-rotative équipée d'un ou plusieurs évents de dégazage ou un malaxeur interne qui fond le mélange. L'amidon peut être indifféremment séché ou non avant son incorporation au mélange, et peut être sous forme de poudre imprégnée de plastifiant ou sous forme de granules plastifiés lors d'une opération de compoundage préalable.

### Description de formes d'exécution préférées de l'invention

Les produits entrant dans les compositions de l'invention sont fondus et homogénéisés avec une extrudeuse à double vis co-rotative ou un malaxeur interne de laboratoire plastographe Brabender® selon les conditions décrites dans les exemples qui suivent.

Des mesures rhéologiques sont alors effectuées sur une plaque de 1 mm d'épaisseur obtenue par pressage à chaud des mélanges ainsi réalisés et séchage à 70°C sous vide pendant 12 heures.

Les mesures rhéologiques montrent que les formulations qui résistent le mieux à la déchirure, qui blanchissent le moins lors d'une pliure et sont les plus transparentes, sont celles qui ont un rapport de leur module dynamique G' représentatif de leur réponse élastique (shear storage modulus) et de leur module dissipatif G'' (shear loss modulus) mesuré à une température de 160°C et à une fréquence de 0,1 rad par seconde (0,1 sec.⁻¹), supérieur à 1,6 et de préférence à 1,7 et que le choix du copolymère ou terpolymère contenant l'anhydride maléïque est avantageux.

La signification physique des modules G' et G'', les expressions les liant et d'autres précisions à leur sujet ont été décrites dans le document "Viscoelastic Properties of Polymers" de J.D. Ferry, 2nd edition, John Wiley & Sons, Inc. 1970 (pages 12 à 15).

Les modules G' et G'' sont évalués à 160°C sur un rhéomètre qui permet de mesurer les propriétés mécaniques dynamiques des polymères de l'état vitreux ou cristallin à l'état fondu. Les mesures en fondu s'effectuent sur des pastilles de 1 à 2 mm d'épaisseur et de 2,5 cm de diamètre prélevées dans des plaques pressées à partir des compositions selon l'invention.

La mesure consiste à déterminer, sous une fréquence de 0,1 rad par seconde (0,1 sec.⁻¹), à une température de 160°C, les modules G' et G'' sur les différentes compositions d'alliage de l'invention, sur une base commune d'une formule contenant 75 % en poids d'amidon + plastifiant et 25 % en poids d'agent compatibilisant.

Les exemples ci-après illustrent l'invention.

### Exemple 1 (de référence)

38,9 g d'amidon est mélangé à 13,6 g de glycérine et 17,5 g de polyéthylène linéaire basse densité Dowlex® et de type 4000E. Ce mélange est introduit dans un mélangeur interne de laboratoire plastographe Brabender® chauffé à une température constante de 160°C et puis malaxé pendant 10 minutes sous une vitesse de rotation des cames de 50 tours/minute. A la fin du malaxage, la masse fondue est prélevée. Après son refroidissement, une partie de celle-ci est prélevée et pressée dans une presse soit sous une épaisseur de 0,35 mm pour évaluer la transparence, l'homogénéité et la résistance au déchirement d'une part, soit sous une épaisseur de 1 mm pour en évaluer les modules G' et G'' au moyen d'un rhéomètre Rheometrics® et à la température de 160°C. A 0,1 sec⁻¹, le rapport G'/G" est de 1,15. On constate que le film obtenu est hétérogène et se déchire facilement.

### Exemple 2 (de référence)

On procède de même que dans l'exemple 1 sauf que le LLDPE est remplacé par un copolymère éthylène/acide acrylique et méthacrylique contenant 26 % d'acide acrylique et méthacrylique Escor® et de type ATX 325. Le rapport G'/G" est égal à 1,34 et les films obtenus se déchirent également.

### Exemple 3 (de référence).

On procède de même que dans l'exemple 1 sauf que le LLDPE est remplacé par un copolymère éthylène/esters acrylique Lotryl® et de type 3400. Le rapport G'/G" est égal à 1,27 et les films sont hétérogènes et fragiles.

### Exemple 4

On procède de même que dans l'exemple 1 sauf que le LLDPE est remplacé par du polyéthylène greffé d'un anhydride maléïque Admer® et de type L2100. Le rapport G'/G" est égal à 1,67 et les films obtenus sont homogènes, résistent à la déchirure mais blanchissent à l'endroit d'une pliure.

### Exemple 5 (de référence)

On procède de même que dans l'exemple 1 sauf que le LLDPE est remplacé par un copolymère éthylène/ester acrylique/anhydre maléïque Lotader® et de type 3700. Le rapport G'/G" est de 1,47; les films se déchirent et sont hétérogènes.

### Exemple 6

On procède de même que dans l'exemple 1 sauf que l'on utilise un Lotader® de type 3410. Le rapport G'/G" est de 1,71 et les films sont homogènes, se déchirent difficilement et ne blanchissent pas à l'endroit d'une pliure.

### Exemple 7

On procède de même que dans l'exemple 1 sauf que l'on utilise un Lotader® de type 3200. Le rapport G'/G" est de 2,11 et les films sont homogènes, résistent à la déchirure et ne blanchissent pas à l'endroit d'une pliure.

### Exemple 8 (de référence)

On procède de même que dans l'exemple 1 sauf que l'on utilise un copolymère éthylène/méthacrylate de glycidyle Rexpearl® et de type RA3150. Le rapport G'/G" est de 1,45 et les films obtenus se déchirent et sont hétérogènes.

### Exemple 9 (de référence)

On procède de même que dans l'exemple 1 sauf que l'on utilise un copolymère éthylène/méthacrylate de glycidyle/ester acrylique Rexpearl® et de type JS4450. Le rapport G'/G" est de 1,38 et les films se déchirent et sont hétérogènes.

### Exemple 10

Le compound obtenu à l'exemple 7 est granulé. 42 g de ces granules sont mélangées à 28 g de polyéthylène linéaire basse densité Dowlex® et de type 4000E. L'ensemble subit la même mise en oeuvre que celle décrite à l'exemple 1. Les films obtenus sont homogènes, ne se déchirent pas et ne blanchissent pas à l'endroit d'une pliure.

### Exemple 11

Le compound obtenu à l'exemple 6 est granulé. 42 g de ces granules sont mélangées à 28 g de polyéthylène linéaire de basse densité Dowlex® et de type 4000E. Les films obtenus sont homogènes, ne se déchirent pas et ne blanchissent pas à l'endroit d'une pliure. Le pourcentage de l'allongement à la rupture mesurée, après que la reprise d'eau se soit stabilisée, à 23°C avec un appareil IVSTRON (vitesse 100 mm/minute) est de 90 % et à 190°C avec un viscosimètre élongationnel Rheometrics® (gradient de vitesse = 0,5 sec⁻¹) de 1420 %.

### Exemple 12 (de référence)

Le même essai que celui de l'exemple 11 est réalisé sauf que l'on part du compound réalisé à l'exemple 1. Les films obtenus se déchirent et sont hétérogènes. Le pourcentage de l'allongement à la rupture mesuré dans les mêmes conditions que pour l'exemple 11 est de 41 % à 23°C et 346 % à 190°C.

### Exemple 13

34,125 g d'amidon de maïs normal, natif et non séché (12,5 % en poids d'eau) Roquette® est mélangé à 18,375 g de glycérine et à 17,5 g de Lotader® 3200. L'ensemble est malaxé et transformé selon le mode opératoire utilisé pour l'exemple 1. Le rapport G'/G" est de 1,95 et les films obtenus sont d'une qualité équivalente à celle constatée lors de l'examen des films de l'exemple 7.

### Exemple 14

22,75 g d'amidon de maïs normal, natif et non séché (12,5 % en poids d'eau) Roquette® est mélangé à 12,25 g de glycérine, 28 g de Dowlex® 4000E et 7 g de Lotader® 3200. L'ensemble est malaxé et transformé selon le mode opératoire utilisé pour l'exemple 1. La qualité des films est équivalente à celle des films de l'exemple 10.

Les produits obtenus peuvent être utilisés pour la fabrication de films destinés au marché de la papeterie ou pour des emballages en matière plastique biodégradables.

## Revendications

1. Composition d'alliage présentant des propriétés améliorées de résistance mécanique contenant :
- de 20 à 80 % en poids d'un amidon, de préférence sous la forme d'un amidon plastifié contenant jusqu'à 50 % en poids de plastifiant par rapport au poids total de l'amidon et du plastifiant,
- de 1 à 70 % en poids d'un polymère agissant comme agent de couplage choisi parmi le groupe formé par le polyéthylène modifié par greffage d'anhydride maléïque et par les copolymères et les terpolymères d'éthylène contenant des unités dérivées de l'anhydride maléïque,
- de 0 à 70 % en poids d'un polymère thermoplastique,
ladite composition présentant un rapport de son module dynamique élastique G' à son module dissipatif G", mesuré à 160 °C et à une fréquence de 0,1 rad par seconde supérieur à 1,6.

2. Composition selon la revendication 1 caractérisée en ce que le rapport G'/G" est supérieur à 1,7.

3. Composition selon l'une quelconque des revendications 1 ou 2 caractérisée en ce que l'amidon est plastifié par de la glycérine, de la diglycérine, de la polyglycérine, du sorbitol et/ou un polyol.

4. Composition selon l'une quelconque des revendications 1 à 3 caractérisée en ce que la composition comprend également un polymère thermoplastique.

5. Composition selon la revendication 4 caractérisée en ce que le polymère thermoplastique est une polyoléfine, telle que le polyéthylène.

6. Composition selon l'une quelconque des revendications 1 à 5 caractérisée en ce que l'amidon mis en oeuvre est déstructuré, modifié ou prégélifié.

7. Composition selon l'une quelconque des revendications 1 à 6 caractérisée en ce que l'amidon contient plus de 70 % en poids d'amylopectine.

8. Composition selon l'une quelconque des revendications 1 ou 2 caractérisée par les pourcentages pondéraux des différents composants :
- de 40 à 60 % d'amidon, de préférence sous forme d'amidon plastifié,
- de 30 à 50 % de polymère thermoplastique et
- de 5 à 20 % d'agent de couplage.

9. Composition selon la revendication 6 caractérisée en ce que l'amidon plastifié mis en oeuvre contient de l'ordre de 5 à 40 % en poids de plastifiant, exprimé par rapport au poids total de l'amidon et du plastifiant.

10. Procédé de préparation d'une composition selon l'une quelconque des revendications 1 à 9 caractérisé en ce qu'on alimente un outil de plastification avec un mélange comportant l'agent de couplage et l'amidon, et éventuellement un polymère thermoplastique.

11. Procédé selon la revendication 10 caractérisé en ce que l'outil de plastification est un malaxeur interne.

12. Procédé selon la revendication 10 caractérisé en ce que l'outil de plastification est une extrudeuse à double vis co-rotative éventuellement équipée d'évents de dégazage.

13. Procédé selon l'une quelconque des revendications 10 à 12 caractérisé en ce qu'on met en oeuvre un mélange comprenant un compound d'amidon plastifié et un agent de couplage.

14. Procédé selon l'une quelconque des revendications 10 à 12 caractérisé en ce qu'on met en oeuvre un mélange comprenant un amidon natif, prégélifié ou modifié, un plastifiant et un agent de couplage.

15. Utilisation des compositions selon l'une quelconque des revendications 1 à 9 et/ou obtenues par le procédé de l'une quelconque des revendications 10 à 14 pour la fabrication de films destinés au marché de la papeterie ou pour des emballages en matière plastique biodégradables.

## Patentansprüche

1. Legierungszusammensetzung, die verbesserte Eigenschaften der mechanischen Festigkeit aufweist, und die
- 20 bis 80 Gew.-% einer Stärke, vorzugsweise in der Form einer weichgemachten Stärke, die bis zu 50 Gew.-% Weichmacher, bezogen auf das Gesamtgewicht der Stärke und des Weichmachers, enthält,
- 1 bis 70 Gew.-% eines als Kopplungsmittel wirkenden Polymers, das aus der Gruppe ausgewählt ist, die von dem durch Pfropfung mit Maleinsäureanhydrid modifizierten Polyethylen und den Ethylencopolymeren und -terpolymeren, die von Maleinsäureanhydrid abgeleitete Einheiten enthalten, gebildet wird,
- 0 bis 70 Gew.-% eines thermoplastischen Polymers
enthält, wobei besagte Zusammensetzung ein Verhältnis ihres dynamischen Elastizitätsmoduls G' zu ihrem Verlustmodul G", gemessen bei 160 °C und bei einer Frequenz von 0,1 rad pro Sekunde, größer 1,6 aufweist.

2. Zusammensetzung gemäß Anspruch 1, dadurch gekennzeichnet, daß das Verhältnis G'/G" größer als 1,7 ist.

3. Zusammensetzung gemäß einem der Ansprüche 1 oder 2, dadurch gekennzeichnet, daß die Stärke durch Glycerin, Diglycerin, Polyglycerin, Sorbit und/oder ein Polyol weichgemacht ist.

4. Zusammensetzung gemäß einem der Ansprüche 1 bis 3, dadurch gekennzeichnet, daß die Zusammensetzung auch ein thermoplastisches Polymer umfaßt.

5. Zusammensetzung gemäß Anspruch 4, dadurch gekennzeichnet, daß das thermoplastische Polymer ein Polyolefin, wie Polyethylen, ist.

6. Zusammensetzung gemäß einem der Ansprüche 1 bis 5, dadurch gekennzeichnet, daß die verwendete Stärke destrukturiert, modifiziert oder vorgeliert ist.

7. Zusammensetzung gemäß einem der Ansprüche 1 bis 6, dadurch gekennzeichnet, daß die Stärke mehr als 70 Gew.-% Amylopektin enthält.

8. Zusammensetzung gemäß einem der Ansprüche 1 oder 2, die durch die Gewichtsprozente der verschiedenen Bestandteile gekennzeichnet ist:
- 40 bis 60% Stärke, vorzugsweise in Form von weichgemachter Stärke,
- 30 bis 50% thermoplastisches Polymer und
- 5 bis 20% Kopplungsmittel.

9. Zusammensetzung gemäß Anspruch 6, dadurch gekennzeichnet, daß die verwendete weichgemachte Stärke Weichmacher in der Größenordnung von 5 bis 40 Gew.-%, bezogen auf das Gesamtgewicht der Stärke und des Weichmachers ausgedrückt, enthält.

10. Verfahren zur Herstellung einer Zusammensetzung gemäß einem der Ansprüche 1 bis 9, dadurch gekennzeichnet, daß man eine Vorrichtung zur Weichmachung mit einem Gemisch speist, das das Kopplungsmittel und die Stärke und gegebenenfalls ein thermoplastisches Polymer umfaßt.

11. Verfahren gemäß Anspruch 10, dadurch gekennzeichnet, daß die Vorrichtung zur Weichmachung ein internes Knetwerk ist.

12. Verfahren gemäß Anspruch 10, dadurch gekennzeichnet, daß die Vorrichtung zur Weichmachung ein gegebenenfalls mit Entgasungsöffnungen ausgestatteter Extruder mit corotativer Doppelschnecke ist.

13. Verfahren gemäß einem der Ansprüche 10 bis 12, dadurch gekennzeichnet, daß man ein Gemisch verwendet, das eine Verbindung aus weichgemachter Stärke und ein Kopplungsmittel umfaßt.

14. Verfahren gemäß einem der Ansprüche 10 bis 12, dadurch gekennzeichnet, daß man ein Gemisch verwendet, das eine natürliche, vorgelierte oder modifizierte Stärke, einen Weichmacher und ein Kopplungsmittel umfaßt.

15. Verwendung der Zusammensetzungen gemäß einem der Ansprüche 1 bis 9 und/oder der Zusammensetzungen, die durch das Verfahren eines der Ansprüche 10 bis 14 erhalten werden, zur Herstellung von Folien, die für den Büromaterial-Markt oder für biologisch abbaubare Kunststoffverpackungen bestimmt sind.

## Claims

1. An alloy composition which possesses improved properties of mechanical resistance, comprising :
- from 20 to 80 % by weight of starch, preferably in the form of plasticised starch containing up to 50 % by weight of plasticiser expressed relative to the total weight of the starch and the plasticiser,
- from 1 to 70 % by weight of a polymer acting as coupling agent which is chosen from the group consisting of polyethylene modified by grafting maleic anhydride and of ethylene copolymers and terpolymers containing units derived from maleic anhydride,
- from 0 to 70 % by weight of a thermoplastic polymer,
said composition offering a ratio of its dynamic modulus of elasticity G' to its dissipative modulus G", measured at 160°C and at a frequency of 0.1 rad per s greater than 1.6.

2. Composition according to Claim 1, characterised in that the G'/G" ratio is greater than 1.7.

3. Composition according to any one of Claims 1 or 2, characterised in that the starch is plasticised with glycerine, diglycerine, polyglycerine, sorbitol and/or a polyol.

4. Composition according to any one of Claims 1 to 3, characterised in that the composition also comprises a thermoplastic polymer.

5. Composition according to Claim 4, characterised in that the thermoplastic polymer is a polyolefin such as polyethylene.

6. Composition according to any one of Claims 1 to 5, characterised in that the starch used is structurally modified, modified or pregelatinised.

7. Composition according to any one of Claims 1 to 6, characterised in that the starch contains more than 70 % by weight of amylopectin.

8. Composition according to any one of Claims 1 or 2, characterised by weight percentages of the various components :
- from 40 to 60 % of starch, preferably in the form of plasticised starch,
- from 30 to 50 % of thermoplastic polymer and
- from 5 to 20 % of coupling agent.

9. Composition according to Claim 6, characterised in that the plasticised starch used contains of the order of 5 to 40 % by weight of plasticiser, expressed relative to the total weight of the starch and the plasticiser.

10. Process for preparing a composition according to any one of Claims 1 to 9, characterised in that a plasticisation means is supplied with a mixture comprising the coupling agent and starch, and optionally a thermoplastic polymer.

11. Process according to Claim 10, characterised in that the plasticisation means is an inner mixer.

12. Process according to Claim 10, characterised in that the plasticisation means is a co-rotating twin screw extruder optionally equipped with degassing vents.

13. Process according to any one of Claims 10 to 12, characterised in that a mixture is used which comprises a plasticised starch compound and a coupling agent.

14. Process according to any one of Claims 10 to 12, characterised in that a mixture is used which comprises a native, pregelatinised or modified starch, a plasticiser and a coupling agent.

15. Use of the compositions according to any one of Claims 1 to 9 and/or obtained by the process of any one of Claims 10 to 14, for the manufacture of films intended for the paper market or for packages made from biodegradable plastic.
